# FASCICULE DE BREVET EUROPEEN

(11) **EP 2 883 452 B1**
(45) Date de publication et mention de la délivrance du brevet: **02.11.2016**
(21) Numéro de dépôt: 14196848.7
(22) Date de dépôt: 08.12.2014
(51) Int. Cl.: A01M 1/10

(54) **Piège selectif à insectes**
Selektive Insektenfalle
Selective insect trap

(30) Priorité: 11.12.2013 FR 1362445
(43) Date de publication de la demande: 17.06.2015
(73) Titulaire: Crea, 74130 Bonneville (FR)
(72) Inventeur: Bodo, Lionel, 74130 Ayze (FR)
(74) Mandataire: Cabinet Poncet

(56) Documents cités:
- DE-A1- 19 505 950
- FR-A1- 2 676 161
- US-A- 4 551 941

## Description

La présente invention concerne un piège à insectes, et concerne plus particulièrement un piège à insectes permettant de piéger certains insectes tout en permettant à d'autres insectes également pris au piège de s'échapper librement.

De façon connue, comme illustré par les documents US 4,551,941, FR 2 676 161 et DE 195 05 950, un piège à insectes comprend une cavité de capture destinée à contenir une substance attractive pour insectes, comportant un orifice d'entrée mettant en communication la cavité de capture avec l'atmosphère extérieure pour l'entrée d'insectes. Les insectes, attirés par la substance attractive (phéromones, mélanges sucrés et/ou alcoolisés, etc.), pénètrent dans la cavité de capture par l'orifice d'entrée puis, ne trouvant pas la possibilité de sortir de la cavité de capture en repassant par l'orifice d'entrée, meurent d'épuisement et/ou d'étourdissement et/ou de noyade.

L'inconvénient de ce type de piège à insectes est qu'il piège indifféremment tous les insectes, que ceux-ci soient dangereux ou bénéfiques pour l'écosystème.

Par exemple, lorsqu'un tel piège est utilisé pour piéger le frelon asiatique (vespa velutina), les abeilles ouvrières, qui ont un rôle positif pour l'écosystème, sont également prises au piège.

Il y a donc besoin d'un piège à insectes permettant de piéger seulement certains insectes.

Un premier problème proposé par l'invention est de concevoir un piège à insectes permettant de capturer certains insectes tandis que d'autres insectes également pris au piège pourront s'échapper librement.

Un deuxième problème proposé par l'invention est de faciliter l'échappement des insectes à ne pas piéger lorsque ceux-ci sont malencontreusement entrés dans la cavité de capture.

Pour atteindre ces objets ainsi que d'autres, l'invention propose un piège à insectes comprenant une cavité de capture destinée à contenir une substance attractive pour insectes, comportant un orifice d'entrée mettant en communication la cavité de capture avec l'atmosphère extérieure pour l'entrée d'insectes ; selon l'invention :
- le piège comporte au moins un orifice d'échappement mettant en communication la cavité de capture avec l'atmosphère extérieure pour la sortie d'insectes,
- ledit au moins un orifice d'échappement comporte une section transversale avec au moins une dimension plus faible que les dimensions de la section transversale de l'orifice d'entrée,
- des moyens de support s'étendent depuis ledit au moins un orifice d'échappement vers l'intérieur de la cavité de capture.

L'orifice d'échappement, grâce à ses dimensions de section transversale plus réduites, permet l'échappement d'insectes de faible taille tandis que les insectes de taille supérieure restent captifs dans la cavité de capture du piège. Les moyens de support s'étendant depuis l'orifice d'échappement vers l'intérieur de la cavité de capture constituent une rampe permettant le cheminement des insectes de petite taille vers l'orifice d'échappement ainsi que leur envol. En effet, on s'est aperçu que la seule présence d'un orifice d'échappement dans une paroi du piège ne suffit pas pour permettre aux insectes à ne pas piéger de sortir efficacement du piège, ceux-ci ne parvenant pas à trouver l'orifice d'échappement, à cheminer vers celui-ci puis à s'envoler convenablement. Sans la présence des moyens de support constituant une rampe de cheminement et d'envol, il faudrait prévoir un orifice d'échappement avec une section transversale présentant des dimensions bien supérieures, permettant à l'insecte à ne pas piéger de passer tout en battant des ailes. Mais un tel orifice d'échappement permettrait alors aux insectes de taille supérieure (que l'on cherche à retenir dans le piège) de s'échapper également.

De préférence, ladite au moins une dimension de la section transversale dudit au moins un orifice d'échappement, plus faible que les dimensions de la section transversale de l'orifice d'entrée, peut comporter une taille comprise entre 5 mm et 6 mm. Une telle dimension permet de garder captifs les insectes tels que le frelon asiatique tout en laissant s'échapper l'abeille ouvrière ou les guêpes qui sont peu dangereuses pour l'homme et ont un rôle très important et bénéfique pour l'écosystème. D'autres dimensions peuvent nénmoins être choisies, en fonction de la taille des insectes qu'on souhaite laisser s'échapper.

Avantageusement, ledit au moins un orifice d'échappement peut être un trou oblong. Le caractère oblong du trou permet de mieux se conformer à la forme générale des insectes qui est également oblongue lorsque ceux-ci ne battent pas des ailes et cheminent en marchant.

De préférence, on peut prévoir que :
- le piège comporte une partie supérieure et une partie inférieure délimitant entre elles la cavité de capture,
- l'orifice d'entrée est ménagé dans la partie inférieure,
- ledit au moins un orifice d'échappement est ménagé dans la partie supérieure.

Une telle disposition de l'orifice d'entrée rend la sortie par celui-ci des insectes pris dans la cavité de capture relativement difficile, ceux-ci n'étant généralement pas habitués à voler en effectuant un mouvement de descente strictement vertical.

La disposition de l'orifice d'échappement permet aux insectes devant s'échapper de trouver plus rapidement l'orifice d'échappement après avoir pénétré dans la cavité de capture par vol effectué selon un mouvement vertical ascendant.

Pour ce faire, la partie supérieure peut de préférence comporter une paroi supérieure dans laquelle est ménagé ledit au moins un orifice d'échappement.

Avantageusement, on peut prévoir que :
- les parties supérieure et inférieure sont deux pièces distinctes destinées à être assemblées par des moyens de fixation pour former entre elles la cavité de capture,
- la partie inférieure est opaque tandis que la partie supérieure est translucide.

Du fait du caractère opaque de la partie inférieure et du caractère translucide de la partie supérieure munie dudit au moins un orifice d'échappement, les insectes à ne pas garder dans le piège viennent naturellement vers la partie supérieure car ils sont attirés par la lumière que laisse passer celle-ci.

Avantageusement, la partie inférieure peut comporter une paroi inférieure depuis laquelle s'étend, vers l'intérieur de la cavité de capture, une cheminée sensiblement cylindrique munie à son extrémité de l'orifice d'entrée.

La présence de la cheminée portant à son extrémité l'orifice d'entrée complique pour les insectes contenus dans la cavité de capture une sortie par l'orifice d'entrée.

Avantageusement, la paroi inférieure peut comporter un réservoir apte à contenir un liquide. Ce liquide peut avoir des propriétés attractives pour les insectes, mais également des propriétés conduisant à l'étourdissement des insectes (liquide alcoolisé par exemple). Enfin, un liquide permet la noyade des insectes contenus dans la cavité de capture une fois que ceux-ci se sont vainement épuisés dans la recherche d'une solution de sortie.

De préférence, le piège peut comporter un capot extérieur disposé de façon à empêcher la pénétration d'eau de pluie dans la cavité de capture par ledit au moins un orifice d'échappement.

On évite ainsi que de l'eau de pluie vienne remplir la cavité de capture du piège à insectes car celle-ci, à partir d'un certain niveau de remplissage, faciliterait pour les insectes contenus dans la cavité de capture l'atteinte de l'orifice d'entrée pour sortir du piège.

Selon un autre aspect, l'invention vise à concevoir un kit de fabrication adapté notamment (mais pas seulement) pour la fabrication d'un piège à insectes tel que décrit précédemment.

Dans ce kit de fabrication, on peut prévoir que :
- ledit au moins un orifice d'échappement est prédécoupé dans l'épaisseur d'une paroi destinée à délimiter la cavité de capture du piège,
- la partie de paroi prédécoupée pour obtenir ledit au moins un orifice d'échappement est prédécoupée de façon partielle selon sa périphérie, de façon à rester attachée à la paroi après découpe.

Le prédécoupage de l'orifice d'échappement permet aux utilisateurs de sélectivement ménager dans la paroi du piège un orifice d'échappement ou conserver une paroi dépourvue d'orifice d'échappement. Un même kit peut ainsi être utilisé en fonction des besoins des utilisateurs pour effectuer un piégeage total ou un piégeage sélectif.

Selon un autre aspect, l'invention propose un procédé de fabrication d'un piège sélectif à l'aide d'un kit de fabrication tel que décrit précédemment, ledit procédé comportant les étapes suivantes :
a) fournir un kit de fabrication tel que décrit précédemment,
b) découper au moins un orifice d'échappement dans la paroi selon la prédécoupe, en faisant pénétrer la partie de paroi ainsi découpée à l'intérieur de la cavité de capture du piège.

D'autres objets, caractéristiques et avantages de la présente invention ressortiront de la description suivante de modes de réalisation particuliers, faite en relation avec les figures jointes, parmi lesquelles :
- la figure 1 est une vue en perspective éclatée d'un mode de réalisation particulier de piège selon l'invention ;
- la figure 2 est une vue en perspective d'une partie supérieure du piège de la figure 1 ;
- la figure 3 est une vue de détails de dessus de la partie supérieure de la figure 2 ; et
- la figure 4 est une vue en perspective illustrant l'utilisation du piège de la figure 1 lors d'un piégeage sélectif.

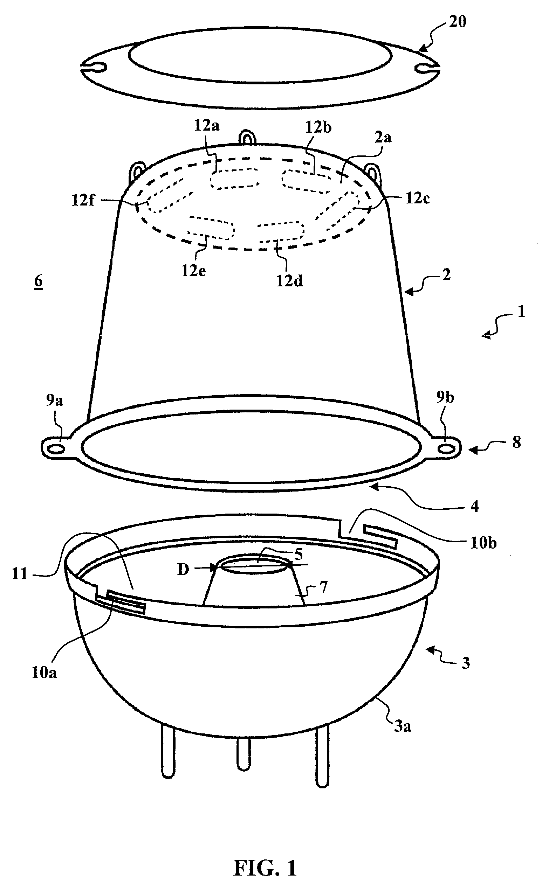

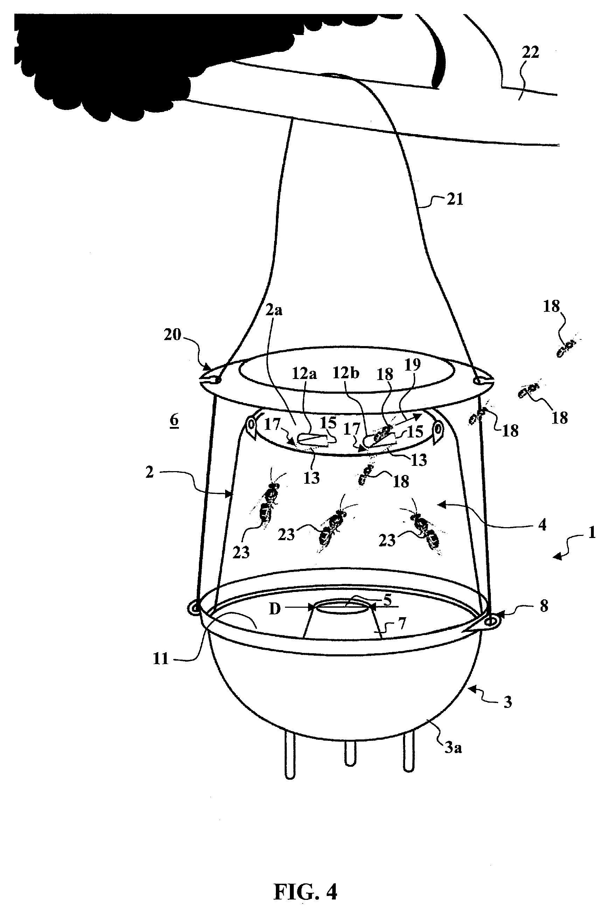

Sur les figures 1 à 4 est illustré un exemple de piège 1 à insectes selon l'invention. Le piège 1 comporte une partie supérieure 2 et une partie inférieure 3 délimitant entre elles une cavité de capture 4 destinée à contenir une substance attractive pour insectes. Le piège 1 comporte un orifice d'entrée 5 mettant en communication la cavité de capture 4 avec l'atmosphère extérieure 6 pour l'entrée d'insectes.

L'orifice d'entrée 5 est ménagé dans la partie inférieure 3. De façon plus détaillée, la partie inférieure 3 comporte une paroi inférieure 3a depuis laquelle s'étend vers l'intérieur de la cavité de capture 4 une cheminée 7 sensiblement cylindrique munie à son extrémité de l'orifice d'entrée 5.

Les parties supérieure 2 et inférieure 3 sont deux pièces distinctes destinées à être assemblées par des moyens de fixation 8 comprenant deux baïonnettes radiales 9a et 9b destinées à venir en prise dans deux encoches 10a et 10b en forme de L. Une fois fixées l'une à l'autre, les parties supérieure 2 et inférieure 3 forment entre elles la cavité de capture 4. La partie inférieure 3 est opaque tandis que la partie supérieure 2 est translucide.

La paroi inférieure 3a comporte un réservoir 11 apte à contenir un liquide.

Pour effectuer un piégeage sélectif d'insectes, le piège 1 comporte six orifices d'échappement 12a à 12f destinés à mettre en communication la cavité de capture 4 avec l'atmosphère extérieure 6 pour permettre la sortie d'insectes.

Les orifices d'échappement 12a à 12f comportent une section transversale avec au moins une dimension plus faible que les dimensions de la section transversale de l'orifice d'entrée 5.

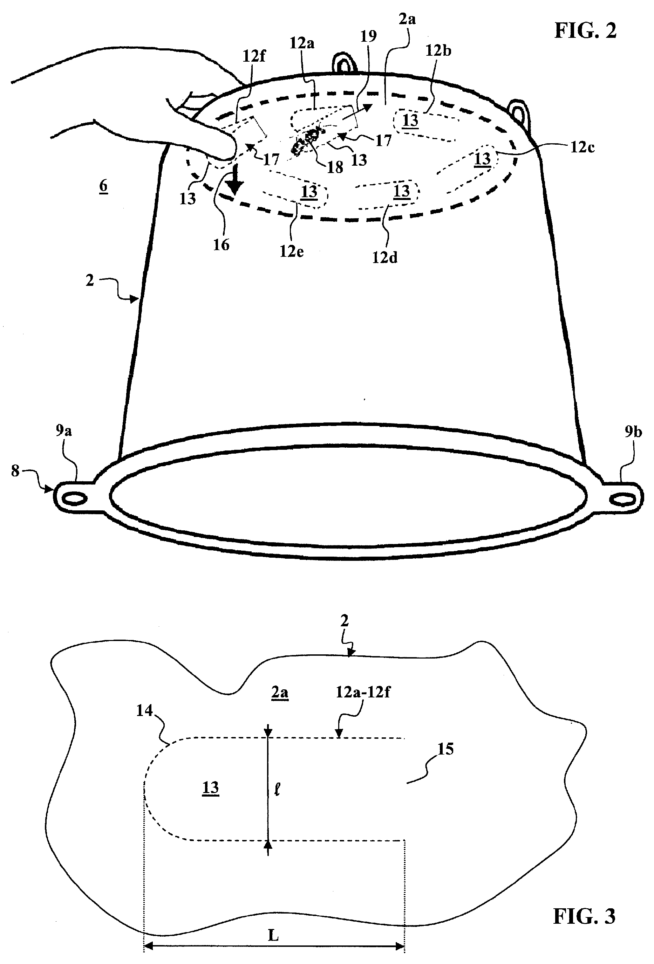

Les orifices d'échappement 12a à 12f sont prédécoupés dans l'épaisseur de la paroi supérieure 2a de la partie supérieure 2 délimitant une partie de la cavité de capture 4 du piège 1. Comme on le voit plus particulièrement en détails sur la figure 3, la partie de paroi 13 prédécoupée pour obtenir les orifices d'échappement 12a à 12f est découpée de façon partielle selon sa périphérie, de façon à rester attachée à la paroi 2a après découpe complète le long de la ligne de prédécoupe 14.

La prédécoupe partielle de la partie de paroi 13 de chaque orifice d'échappement 12a à 12f laisse en effet subsister une zone d'attachement 15 permettant à la partie de paroi 13 de rester bien attachée à la paroi 2a après que l'utilisateur ait achevé sa découpe en enfonçant et faisant pénétrer la partie de paroi 13 à l'intérieur de la cavité de capture 4 du piège 1 par une pression manuelle exercée selon la flèche 16 (figure 2).

Après leur découpe par enfoncement, les parties de paroi 13 restent solidaires de la paroi 2a et constituent des moyens de support 17 s'étendant depuis les orifices d'échappement 12a à 12f vers l'intérieur de la cavité de capture 4.

Les moyens de support 17 constituent chacun une plateforme permettant aux insectes à ne pas piéger (tels que les guêpes ou les abeilles ouvrières) de se poser, puis de cheminer en marchant en direction de l'un des orifices d'échappement 12a, 12b, 12c, 12d, 12e ou 12f pour sortir de la cavité de capture 4 et enfin prendre leur envol. Sur la figure 2, on voit une abeille 18 posée sur les moyens de support 17 constitués par une partie de paroi 13 prédécoupée par l'utilisateur. L'abeille 18 chemine ensuite en marchant sur les moyens de support 17 selon le mouvement illustré par la flèche 19 pour sortir de la cavité de capture 4 par l'orifice d'échappement 12a et ensuite s'envoler.

Dans le mode de réalisation illustré sur les figures 1 à 4, le piège 1 comporte six orifices d'échappement 12a à 12f de forme oblongue.

De façon plus détaillée, les orifices d'échappement 12a à 12f ont une section transversale présentant une largeur ℓ f comprise entre 5 mm et 6 mm. Les trous oblongs 12a à 12f présentent une longueur L comprise entre 12 mm et 16 mm.

De son côté, l'orifice d'entrée 5 présente une section transversale circulaire de diamètre D compris entre 20 mm environ et 30 mm environ.

Pour éviter que de l'eau de pluie pénètre dans la cavité de capture 4 par les orifices d'échappement 12a à 12f après découpe des parties de paroi 13 pour former les orifices d'échappement 12a à 12f, on prévoit un capot extérieur 20 destiné à être disposé au-dessus de la partie supérieure 2.

Le piège 1 est livré sous la forme d'un kit de fabrication comprenant la partie supérieure 2, la partie inférieure 3 et le capot extérieur 20. Les parties de paroi 13 sont seulement prédécoupées dans la paroi supérieure 2a qui est alors toujours fermée pour empêcher tous les insectes, quelles que soient leurs tailles, de sortir de la cavité de capture 4. Ce kit de fabrication permet ainsi de fabriquer un piège 1 à insectes adapté pour le piégeage de tous les insectes.

Lorsque l'utilisateur souhaite effectuer un piégeage sélectif d'insectes, par exemple pour piéger les frelons asiatiques tout en laissant s'échapper les abeilles ou les guêpes, il enfonce les parties de paroi 13 dans la cavité de capture 4 pour obtenir les orifices d'échappement 12a à 12f par découpage selon les lignes de prédécoupe 14 et former les moyens de support 17.

Le découpage des parties de paroi 13 peut s'effectuer par une simple pression manuelle de l'utilisateur sur la partie de paroi 13, de façon à rompre les zones de liaison entre la partie de paroi 13 et la paroi 2a le long de la ligne de prédécoupe 14.

Une fois que sont formés les orifices d'échappement 12a à 12f et les moyens de support 17, l'utilisateur dispose une substance attractive dans la cavité de capture 4, puis solidarise la partie supérieure 2 et la partie inférieure 3 par les moyens de fixation 8 pour fermer la cavité de capture 4. L'utilisateur dispose ensuite le capot extérieur 20 au-dessus de la partie supérieure 2 et à l'écart de celle-ci, et peut ensuite suspendre le tout par un lien 21 à la branche 22 d'un arbre.

Les insectes entrent par l'orifice d'entrée 5 par un vol vertical ascendant. Guidés par la lumière passant à travers la partie supérieure 2 translucide, les insectes 18 (abeilles, guêpes, etc.) qu'on ne veut pas piéger sont attirés vers la paroi supérieure 2a au voisinage de laquelle ils rencontrent les moyens de support 17 sur lesquels ils se posent puis cheminent en marchant vers l'un des orifices d'échappement 12a à 12f pour ensuite s'échapper hors du piège 1. Les insectes de plus grosse taille tels que les frelons asiatiques 23, ne parvenant pas à passer par les orifices d'échappement 12a à 12f dont la section transversale est trop réduite, restent captifs dans la cavité de capture 4 et y meurent ensuite de fatigue, et/ou d'étourdissement et/ou de noyade.

La présente invention n'est pas limitée aux modes de réalisation qui ont été explicitement décrits, mais elle en inclut les diverses variantes et généralisations contenues dans le domaine des revendications ci-après.

## Revendications

1. Piège (1) à insectes comprenant une cavité de capture (4) destinée à contenir une substance attractive pour insectes, comportant un orifice d'entrée (5) mettant en communication la cavité de capture (4) avec l'atmosphère extérieure (6) pour l'entrée d'insectes, **caractérisé en ce que** :
- le piège (1) comporte au moins un orifice d'échappement (12a-12f) mettant en communication la cavité de capture (4) avec l'atmosphère extérieure (6) pour la sortie d'insectes,
- ledit au moins un orifice d'échappement (12a-12f) comporte une section transversale avec au moins une dimension (ℓ) plus faible que les dimensions (D) de la section transversale de l'orifice d'entrée (5),
- des moyens de support (17) s'étendent depuis ledit au moins un orifice d'échappement (12a-12f) vers l'intérieur de la cavité de capture (4).

2. Piège (1) selon la revendication 1, **caractérisé en ce que** ladite au moins une dimension (ℓ) de la section transversale dudit au moins un orifice d'échappement (12a-12f), plus faible que les dimensions (D) de la section transversale de l'orifice d'entrée (5), comporte une taille comprise entre 5 mm et 6 mm.

3. Piège (1) selon l'une des revendications 1 ou 2, **caractérisé en ce que** ledit au moins un orifice d'échappement (12a-12f) est un trou oblong.

4. Piège (1) selon l'une quelconque des revendications 1 à 3, **caractérisé en ce que** :
- le piège (1) comporte une partie supérieure (2) et une partie inférieure (3) délimitant entre elles la cavité de capture (4),
- l'orifice d'entrée (5) est ménagé dans la partie inférieure (3),
- ledit au moins un orifice d'échappement (12a-12f) est ménagé dans la partie supérieure (2).

5. Piège (1) selon la revendication 4, **caractérisé en ce que** la partie supérieure (2) comporte une paroi supérieure (2a) dans laquelle est ménagé ledit au moins un orifice d'échappement (12a-12f).

6. Piège (1) selon l'une des revendications 4 ou 5, **caractérisé en ce que** :
- les parties supérieure (2) et inférieure (3) sont deux pièces distinctes destinées à être assemblées par des moyens de fixation (8) pour former entre elles la cavité de capture (4),
- la partie inférieure (3) est opaque tandis que la partie supérieure (2) est translucide.

7. Piège (1) selon l'une quelconque des revendications 4 à 6, **caractérisé en ce que** la partie inférieure (3) comporte une paroi inférieure (3a) depuis laquelle s'étend, vers l'intérieur de la cavité de capture (4), une cheminée (7) sensiblement cylindrique munie à son extrémité de l'orifice d'entrée (5).

8. Piège (1) selon la revendication 7, **caractérisé en ce que** la paroi inférieure (3a) comporte un réservoir (11) apte à contenir un liquide.

9. Piège (1) selon l'une quelconque des revendications 1 à 8, **caractérisé en ce qu'**il comporte un capot extérieur (20) disposé de façon à empêcher la pénétration d'eau de pluie dans la cavité de capture (4) par ledit au moins un orifice d'échappement (12a-12f).

10. Kit de fabrication adapté pour la fabrication d'un piège (1) à insectes selon l'une quelconque des revendications 1 à 9, **caractérisé en ce que** :
- ledit au moins un orifice d'échappement (12a-12f) est prédécoupé dans l'épaisseur d'une paroi (2a) destinée à délimiter la cavité de capture (4) du piège (1),
- la partie de paroi (13) prédécoupée pour obtenir ledit au moins un orifice d'échappement (12a-12f) est prédécoupée de façon partielle selon sa périphérie, de façon à rester attachée à la paroi (2a) après découpe.

11. Procédé de fabrication d'un piège 1 à insectes selon l'une quelconque des revendications 1 à 9, **caractérisé en ce qu'**il comporte les étapes suivantes :
a) fournir un kit de fabrication selon la revendication 10,
b) découper au moins un orifice d'échappement (12a-12f) dans la paroi (2a) selon la prédécoupe, en faisant pénétrer la partie de paroi (13) ainsi découpée à l'intérieur de la cavité de capture (4) du piège (1).

## Patentansprüche

1. Falle (1) für Insekten umfassend einen Fangraum (4), der eingerichtet ist, eine auf Insekten anziehend wirkende Substanz aufzuehmen, umfassend eine Zugangsöffnung (5), die den Fangraum (4) mit der äußeren Umgebung (6) zum Einlassen von Insekten verbindet, **dadurch gekennzeichnet, dass**:
- die Falle (1) mindestens eine Fluchtöffnung (12a-12f) umfasst, die den Fangraum (4) mit der äußeren Umgebung (6) zum Entweichen der Insekten verbindet,
- die genannte mindestens eine Fluchtöffnung (12a-12f) einen Querschnitt mit mindestens einer Ausdehnung (ℓ) umfasst, die geringer ist, als die Ausdehnungen (D) des Querschnitts der Zugangsöffnung (5),
- Tragemittel (17), die sich von der mindestens einen genannten Fluchtöffnung (12a-12f) ins Innere des Fangraumes (4) hinein erstrecken.

2. Falle (1) nach Anspruch 1, **dadurch gekennzeichnet, dass** die genannte mindestens eine Ausdehnung (ℓ) des Querschnitts der genannten mindestens einen Fluchtöffnung (12a-12f), die geringer ist, als die Ausdehnungen (D) des Querschnitts der Zugangsöffnung (5), einen Umfang zwischen 5mm und 6mm umfasst.

3. Falle (1) nach einem der Ansprüche 1 oder 2, **dadurch gekennzeichnet, dass** die genannte mindestens eine Fluchtöffnung (12a-12f) ein Langloch ist.

4. Falle (1) nach einem der Ansprüche 1 bis 3, **dadurch gekennzeichnet, dass**:
- die Falle (1) eine Oberschale (2) und eine Unterschale (3) umfasst, die miteinander den Fangraum (4) begrenzen,
- die Zugangsöffnung (5) in der Unterschale (3) vorgesehen ist,
- die genannte wenigstens eine Fluchtöffnung (12a-12f) in der Oberschale (2) vorgesehen ist.

5. Falle (1) nach Anspruch 4, **dadurch gekennzeichnet, dass** die Oberschale (2) eine Deckwand (2a) umfasst, in der die genannte wenigstens eine Fluchtöffnung (12a-12f) vorgesehen ist.

6. Falle (1) nach einem der Ansprüche 4 oder 5, **dadurch gekennzeichnet, dass**:
- die Oberschale (2) und die Unterschale (3) zwei verschiedene Teile sind, die eingerichtet sind, mittels Fixiermittel (8) zum Bilden des genannten Fangraumes (4) miteinander verbunden zu werden,
- die Unterschale (3) lichtundurchlässig ist, während die Oberschale (2) durchsichtig ist.

7. Falle (1) nach irgendeinem der Ansprüche 4 bis 6, **dadurch gekennzeichnet, dass** die Unterschale (3) eine Bodenwand (3a) umfasst, von der aus sich in das Innere des Fangraumes (4) ein im Wesentlichen zylindrischer Schacht (7), der an seinem Ende die Zugangsöffnung (5) umfasst, erstreckt.

8. Falle (1) nach Anspruch 7, **dadurch gekennzeichnet, dass** die Bodenwand (3a) einen Behälter (11) umfasst, der eingerichtet ist, eine Flüssigkeit aufzunehmen.

9. Falle (1) nach irgendeinem der Ansprüche 1 bis 8, **dadurch gekennzeichnet, dass** sie eine Außenhaube (20) umfasst, die derart angeordnet ist, dass das Eindringen von Regenwasser in den Fangraum (4) über die genannte wenigstens eine Fluchtöffnung (12a-12f) verhindert wird.

10. Bausatz, der zum Herstellen einer Falle (1) für Insekten nach irgendeinem der Ansprüche 1 bis 9 eingerichtet ist, **dadurch gekennzeichnet, dass**:
- die genannte wenigstens eine Fluchtöffnung (12a-12f) durch die Dicke einer Wand (2a), die eingerichtet ist, den Fangraum (4) der Falle (1) abzugrenzen, vorgestanzt ist,
- das Wandelement (13), das zum Erhalten der genannten wenigstens einen Fluchtöffnung (12a-12f) vorgestanzt ist, entlang seiner Peripherie derart teilweise vorgestanzt ist, dass es nach dem Stanzen mit der Wand (2a) verbunden bleibt.

11. Herstellungsverfahren für eine Falle (1) für Insekten nach irgendeinem der Ansprüche 1 bis 9, **dadurch gekennzeichnet, dass** es die folgenden Schritte umfasst:
a) Bereitstellen eines Bausatzes nach Anspruch 10,
b) Stanzen wenigstens einer Fluchtöffnung (12a-12f) durch die Wand (2a) entlang des Vorschnittes, indem das Wandelement (13) durchdrungen wird und auf diese Weise in das Innere des Fangraumes (4) der Falle (1) geschnitten wird.

## Claims

1. Insect trap (1) comprising an entrapment cavity (4) intended to contain an attractant for insects, comprising an entry orifice (5) connecting the entrapment cavity (4) with the outside atmosphere (6) for the entry of insects, **characterized in that**:
- the trap (1) comprises at least one escape orifice (12a-12f) connecting the entrapment cavity (4) with the outside atmosphere (6) for insects to exit,
- said at least one escape orifice (12a-12f) comprises a cross section with at least one dimension (ℓ) smaller than the dimensions (D) of the cross section of the entry orifice (5),
- support means (17) extend from said at least one escape orifice (12a-12f) to the interior of the entrapment cavity (4).

2. Trap (1) according to claim 1, **characterized in that** said at least one dimension (ℓ) of the cross section of said at least one escape orifice (12a-12f), smaller than the dimensions (D) of the cross section of the entry orifice (5), has a size of between 5 mm and 6 mm.

3. Trap (1) according to one of claims 1 and 2, **characterized in that** said at least one escape orifice (12a-12f) is an oblong hole.

4. Trap (1) according to any one of claims 1 to 3, **characterized in that**:
- the trap (1) comprises a top part (2) and a bottom part (3) delimiting between them the entrapment cavity (4),
- the entry orifice (5) is formed in the bottom part (3),
- said at least one escape orifice (12a-12f) is formed in the top part (2).

5. Trap (1) according to Claim 4, **characterized in that** the top part (2) comprises a top wall (2a) in which said at least one escape orifice (12a-12f) is formed.

6. Trap (1) according to one of claims 4 and 5, **characterized in that**:
- the top (2) and bottom (3) parts are two distinct pieces intended to be joined by fixing means (8) to form between them the entrapment cavity (4),
- the bottom part (3) is opaque whereas the top part (2) is translucent.

7. Trap (1) according to any one of claims 4 to 6, **characterized in that** the bottom part (3) comprises a bottom wall (3a) from which extends, towards the interior of the entrapment cavity (4), a substantially cylindrical chimney (7) provided at its end with the entry orifice (5).

8. Trap (1) according to claim 7, **characterized in that** the bottom wall (3a) comprises a reservoir (11) suitable for containing a liquid.

9. Trap (1) according to any one of claims 1 to 8, **characterized in that** it comprises an external cap (20) disposed so as to prevent the penetration of rainwater into the entrapment cavity (4) through said at least one escape orifice (12a-12f).

10. Construction kit suitable for constructing an insect trap (1) according to any one of claims 1 to 9, **characterized in that**:
- said at least one escape orifice (12a-12f) is pre-cut in the thickness of a wall (2a) intended to delimit the entrapment cavity (4) of the trap (1),
- the part of wall (13) pre-cut to obtain said at least one escape orifice (12a-12f) is pre-cut partially along its periphery, so as to remain attached to the wall (2a) after cutting.

11. Method for constructing an insect trap (1) according to any one of claims 1 to 9, **characterized in that** it comprises the following steps:
a) supplying a construction kit according to claim 10,
b) cutting at least one escape orifice (12a-12f) in the wall (2a) according to the pre-cut, by causing the duly cut part of wall (13) to penetrate into the interior of the entrapment cavity (4) of the trap (1).
